# EUROPEAN PATENT SPECIFICATION

(11) **EP 1 709 364 B1**
(45) Date of publication and mention of the grant of the patent: **06.10.2010**
(21) Application number: 05704661.7
(22) Date of filing: 03.01.2005
(51) Int. Cl.: F23G 5/02, F23G 5/00, F23J 15/00, F23G 5/16, F23G 7/06, F23G 5/46

(54) **SYSTEM FOR TREATING ORGANIC MATERIALS TO REDUCE THEM TO INORGANIC COMPONENTS AND METHODS FOR TREATING ORGANIC MATERIALS TO REDUCE THEM TO INORGANIC COMPONENTS**
SYSTEM ZUR BEHANDLUNG VON ORGANISCHEN MATERIALIEN ZU IHRER REDUZIERUNG AUF ANORGANISCHE KOMPONENTEN UND VERFAHREN ZUR BEHANDLUNG VON ORGANISCHEN MATERIALIEN ZU IHRER REDUZIERUNG VON ANORGANISCHE KOMPONENTEN
SYSTEME ET PROCEDE DE TRAITEMENT DE MATERIAUX ORGANIQUES DESTINES A REDUIRE CES DERNIERS EN COMPOSANTS INORGANIQUES

(30) Priority: 08.01.2004 PL 36433104; 15.03.2004 PL 36627504; 15.06.2004 PL 36851404
(43) Date of publication of application: 11.10.2006
(73) Proprietor: Wysocki, Michal, 31-216 Krakow (PL)
(72) Inventor: WYSOCKI, Zygmunt, PL-31-228 Krakow (PL)
(74) Representative: Hudy, Ludwik
(86) International application number: PCT/PL2005/000001
(87) International publication number: WO 2005/066542

(56) References cited:
- WO-A-03/040619
- DE-A1- 4 339 157
- PATENT ABSTRACTS OF JAPAN vol. 006, no. 169 (C-122), 2 September 1982 (1982-09-02) & JP 57 084725 A (MITSUBISHI HEAVY IND LTD), 27 May 1982 (1982-05-27)
- PATENT ABSTRACTS OF JAPAN vol. 009, no. 180 (C-293), 25 July 1985 (1985-07-25) & JP 60 051544 A (MITSUBISHI JUKOGYO KK), 23 March 1985 (1985-03-23)
- PATENT ABSTRACTS OF JAPAN vol. 2000, no. 15, 6 April 2001 (2001-04-06) & JP 2000 345175 A (MITSUBISHI HEAVY IND LTD), 12 December 2000 (2000-12-12)

## Description

The present invention relates to a system and a method for treating energy-containing organic materials to reduce them to inorganic components and release organic energy contained in them. The present invention also relates to a system for purifying of outlet gasses and a method of purifying outlet gasses.

Industrial and non-industrial human activities result in constantly increasing waste production. The amount of waste increases each year and consequently the cost of its treatment increases as well. A considerable part of waste has a large content of organic material. Today's environmental protection requirements allow only such treatment methods that do not produce atmospheric pollution and whose end-products are in environmentally-safe form. However, due to increased waste production, the amount of gasses released to the atmosphere is rising each year. The atmosphere of the natural environment can be protected from the hazardous pollution only by more efficient purification systems.

Many components of gas purifying systems were designed by the Institute of Catalysis and Surface Chemistry of the Polish Academy of Science in Krakow. They are described in several patent documents, including the Polish patents No. 138942 and 154896 that refer to a device for removing organic impurities, especially ethylene, from gasses. The device comprises two reactors connected with a collector by a connector pipe through which purified gasses are released directly to the atmosphere.

The Polish patent No. 154894 presents a catalytic burner in the form of a metal cylinder, divided by an internal barrier into two catalytic-regenerative chambers serving as heat generators.

In turn, the Polish patent application No. 349475 entitled "A system for mineralization of waste produced at waste-water treatment" presents a highly efficient system for chemical treatment of sewage and liquid industrial waste using burning chambers and oxidation to convert them and subsequently passing the gaseous products through catalytic after-burners. The system contains a catalytic after-burner, a heat exchanger and at least one burning chamber with a burner, whose outlet is connected with the inlet of the catalytic after-burner to which air is supplied in a controllable manner.

One of the methods for treatment of waste involves biological means. The disadvantage of biological treatment is a low efficiency and a need for large operation area.

The abovementioned disadvantages are partially avoided if waste is treated by efficient chemical processing using burning chambers and oxidation to convert it and subsequently passing the gaseous products through catalytic after-burners. An installation to achieve this is described in the above mentioned Polish patent application No. 349475.

In addition, Publication DE 4339157 A1 teaches a system for treating organic material to reduce it to inorganic compounds.

In turn, the Patent Abstract of Japan vol. 006, no. 169 (C-122) & JP 57 084725, the Patent Abstract of Japan vol. 009, no. 180 (C-293) & JP 60 051544 A and the Patent Abstract of Japan vol. 2000, no. 15 & JP 2000 345175 A refer to an apparatus for treating exhaust gas, an oxidizing catalyst and a selective removal of carbon monoxide.

Furthermore, the Publication US 5 589 142 A teaches a system for the abatement of industrial process emissions that comprises a catalytic oxidizer and a selective reduction bank integrated into a single housing whereas the Publication US 6 321 462 B presents an integrated web dryer and regenerative exchanger, as well as a method of drying a web material.

The purpose of the invention is to create a system for the conversion of organic, energy-rich material into inorganic compounds in a way that is more efficient than the systems presently known and which complies with the current environmental protection requirements.

The idea of the invention is that the conversion of organic, energy-rich waste, of domestic or industrial origin, and in the form of sewage sludge, takes place in an arrangement for producing thermal energy, fitted with mechanical means to separate water from the organic material and a reverse-flow reactor with a first reactor and a second reactor connected by a collector on a catalytic after-burning end and on a suction-offtake end through a reverse valve, which in one position delivers the gasses to be purified to an inlet of the first reactor and, at the same time, carries off purified gasses from an inlet of the second reactor to an outlet flow line, and in another position, delivers the gasses to be purified to the inlet of the second reactor and, at the same time, carries off the purified gasses from the inlet of the first reactor to the outlet flow line, the first reactor and the second reactor having a multilayered structure comprising an oxidizing platinum catalyst with admixtures, a palladium catalyst with admixtures and an oxide-reducing catalyst with admixtures. Additionally, the outlet flow line is connected through a connector pipe to the collector with throttles and to the catalytic after-burning end of the first and second catalytic reactors. Furthermore, through the connector pipe the collector is connected with a three-way valve, which in one position connects the outlet flow line to an inlet of one chosen from an active filter with activated carbon, an adsorber, a catalytic after-burner and a secondary catalytic reactor with an outlet connected to the atmosphere, and in another position, connects the outlet flow line to the atmosphere.

Preferably, at an inlet and an outlet of the first and second catalytic reactors are situated shutters having apertures assuring an even flow of oxidation products within the entire space of the first and second catalytic reactors.

Also it is desirable that the organic material are waste/sludge and/or willow chippings and/or gasses containing organic compounds and/or organic material derived from domestic and industrial sewage in the form of sludge.

A by-pass flow line designed to carry off the purified gasses from the first and second catalytic reactors can be connected to the atmosphere.

Advantage is gained by that to one chosen from the active filter with activated carbon, the adsorber, the catalytic after-burner and the secondary catalytic reactor is connected a counter flow system forcing a counter flow of air in one chosen from the active filter with activated carbon, the adsorber, the catalytic after-burner and the secondary catalytic reactor, from an outlet of one chosen from the active filter with activated carbon, the adsorber, the catalytic after-burner and the secondary catalytic reactor toward its inlet.

An essential aspect of the invention is also that in the breakdown method for treating organic material to reduce them to inorganic compounds wherein, if necessary, water is separated from the organic material by mechanical means and the water-content in the organic material is reduced to ca. 80% and then the organic material are delivered to at least one unit designed to degas and gasify the organic material in which necessary conditions are assured to completely degas and gasify the organic material at reduced oxygen levels, and during the process of degassing/gasification of the organic material gasses thus produced are driven off, mixed with air and their flameless oxidation takes place in a reactor and thermal energy derived from the flameless oxidation is utilised. According to this method, the unit designed to the flameless oxidation is provided with a reverse-flow reactor with a first reactor and a second reactor connected by a collector on a catalytic after-burning end and on a suction-offtake end through a reverse valve, which in one position delivers the gasses to be purified to an inlet of the first reactor and, at the same time, carries off purified gasses from an inlet of the second reactor to an outlet flow line, and in another position, delivers the gasses to be purified to the inlet of the second reactor and, at the same time, carries off the purified gasses from the inlet of the first reactor to the outlet flow line, the first reactor and the second reactor having a multilayered structure comprising an oxidizing platinum catalyst with admixtures, a palladium catalyst with admixtures and an oxide-reducing catalyst with admixtures. In addition, hot gasses are carried out through a connector pipe from collector with throttles connecting the catalytic reactors on the catalytic after-burning end and are mixed with the purified gasses derived from the outlet flow line, and mixture of the hot gasses is delivered to the inlet of one chosen from the active filter with activated carbon, the adsorber, the catalytic after-burner and the secondary catalytic reactor in which the mixture of the purified gasses and the hot gasses is subjected to flameless oxidation and then released to the atmosphere.

Preferably, the thermal energy derived from the flameless oxidation is utilised to create the conditions necessary to degas and gasify the waste/sludge and/or willow chippings and/or organic material derived from domestic and industrial sewage in the form of sludge.

Preferably, in order to prevent the decrease of the purifying efficiency of the secondary catalytic reactor, hot air is delivered to the outlet of the secondary catalytic reactor and then transmitted through one chosen from the active filter with activated carbon, the adsorber, the catalytic after-burner and the secondary catalytic reactor on the direction opposite to the flow of the mixture of purified gasses and hot gasses which are then delivered to the inlet of one of the first reactor and the second reactor to which the gasses derived from gasification are delivered.

The invention will now be described by way of example and with reference to the accompanying drawings in which:
Fig. 1A and 1B show schematically a system for treating energy-containing organic materials;
Fig. 2A, 2B and 2C show schematically an extended system of purifying outlet gasses;
Fig. 3 shows schematically a detailed embodiment of a reverse-flow reactor;
Fig. 4 shows schematically a system of purifying gasses with a system of adsorbers; and
Fig. 5 shows schematically a system of purifying gasses with a low concentration of organic compounds.

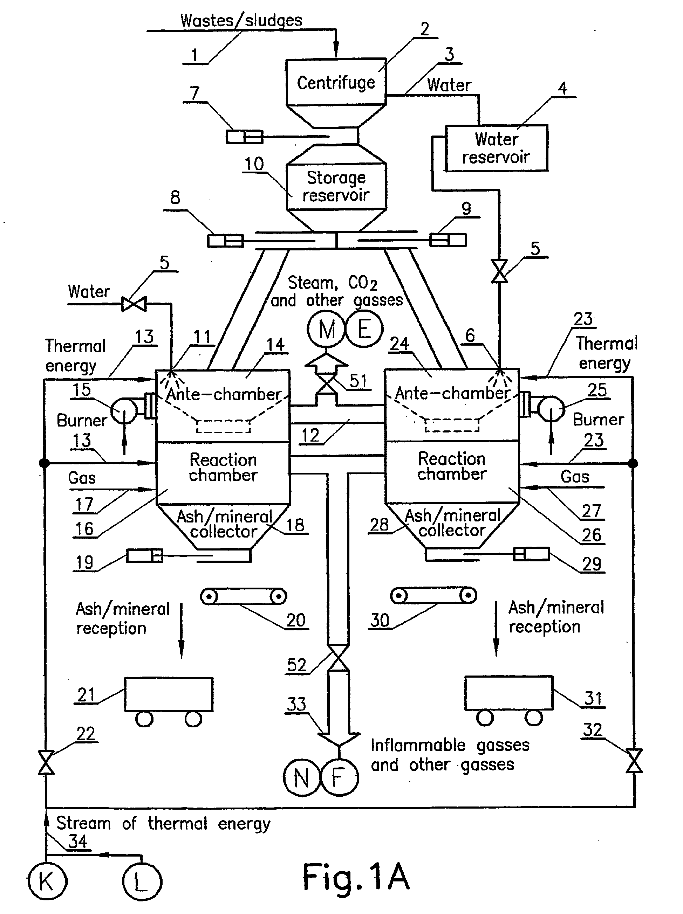

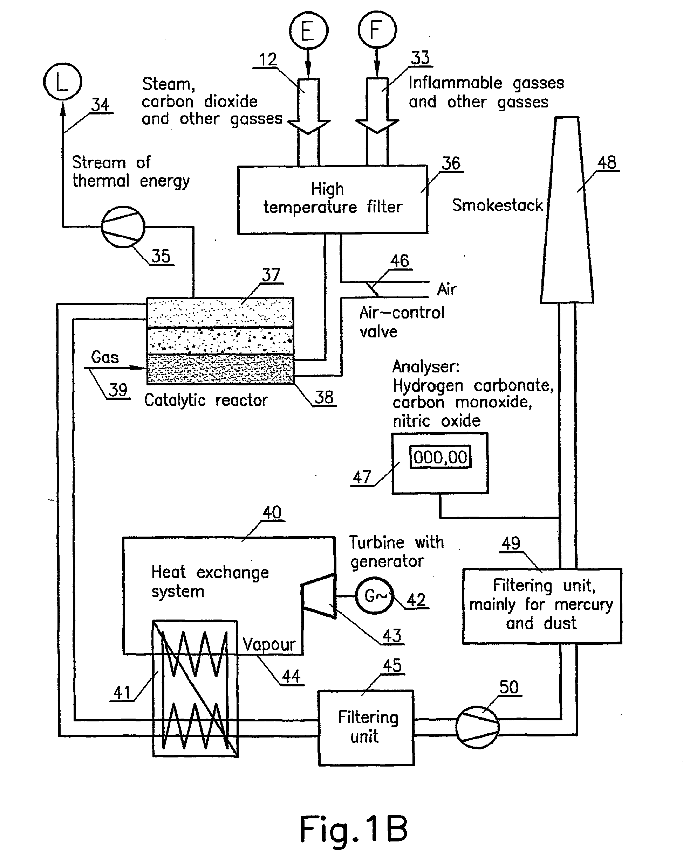

Fig. 1A and 1B present the basic components of the system for treating energy-containing organic materials, including waste such as organic waste, sewage, industrial waste and sludge. The system purpose is to reduce the waste to inorganic compounds and/or components and release the thermal energy contained in it. Fig. 1B illustrates the system for release of the thermal energy and Fig. 1A illustrates the system for its utilisation.

Depending on the level of hydration of energy-containing organic materials 1, for example willow chippings or waste in solid or liquid form, the system may be fitted with mechanical devices for water removal, such as a centrifuge 2. The centrifuge 2 treats organic material with a water content of up to 80%. The centrifuged material is then transferred to a storage reservoir 10 through a gate valve 7 and water 3 separated by the centrifuge 2 flows to a water reservoir 4.

The centrifuged material from the storage reservoir 10 should be delivered in regulated amounts to ante-chambers 14, 24, and the rate of delivery is regulated by gate valves 8, 9. The ante-chambers 14, 24 provide necessary conditions for complete de-gasification and gasification of material at low-oxygen atmosphere. In the ante-chambers the material is further desiccated, to reduce their water content below 50% or, in some cases, watered through valves 5 and openings 6, 11.

The desiccated material is next directed into reaction chambers 16, 26 where they are completely degasified and gasified, and the temperature therein is maintained below 600°C and preferably at around 500°C. Thermal energy 13, 23 necessary for desiccation and gasification is delivered either through control valves 22, 32 connected at points K or L to the heat and hot gasses producing section, or from burners 15, 25 where inflammable gasses are burned. Steam, carbon dioxide and other non-flammable gasses 12 from the desiccation process are directed through a control valve 51 either directly or via a high-temperature filter 36 to the catalytic reactor 38 shown in Fig. 1B. The remainder of the gasified material, after the gas fraction has been driven off, falls to ash-collectors 18, 28 where, upon operation of gate valves 19, 29, falls onto conveyers 20, 30 which carry it to carriages 21, 31.

Inflammable gas 33 and volatile fractions, including CₓH_{y}, CO and other inflammable gasses, pass through a valve 52 and through the high-temperature filter 36 to the catalytic reactor 38, which does not form part of the invention but represent background art that is useful for understanding the invention. The catalytic reactor 38 is a unit of the heat-producing arrangement shown in Fig. 1B. In the catalytic reactor 38 the CₓH_{y}, CO and other inflammable gasses are mixed with warmed air and their flameless oxidation takes place at a temperature of ca. 500°C. The temperature at which this reaction takes place is regulated by the flow-rate of the inflammable gas mixture and the introduction of a non-reactive gas 39, for example carbon dioxide at a suitably low temperature. The air necessary for flameless oxidation is transmitted through an air-control valve 46.

The hot gasses produced in the catalytic reactor 38 pass through a filter system 37 and form a stream of thermal energy 34. The stream flow is forced by a system of fans and compressors 35. The thermal energy from the oxidation process that is surplus to the requirements of the desiccation, degassing and flameless oxidation of the organic material is passed to an exchanger 41 forming a part of heat-exchange system 40. The surplus energy may be used, for example, to generate vapour 44 for a turbine 43 with a generator 42. The cooled gasses are drawn through a filtering unit 45 by a fan 50 and a final dust-filter system 49 and a smokestack 48. The amount of harmful substances discharged through the stack 48, and so the purifying quality of the system, is monitored by a gas-analyser 47 and is controlled by a regulating system, which implies controlling the overall process.

The process of reducing organic materials 1 to inorganic compounds and/or components begins with the removal of water using mechanical devices 2, for example centrifugal separators. These are capable of reducing the water-content of the material to ca. 80%. The material to be processed further is stored in the storage reservoir 10. It is desirable that the capacity of the storage reservoir is sufficient to provide material for the continuous operation of at least one reaction chamber 16, 26, at times when the power is disconnected which interrupts the delivery of further material to the reservoir (e.g. for cleaning or exchanging filters). The partially dehydrated material should be preferably fed continuously, first to the preliminary chambers 14, 24 where they are heated, undergo further desiccation and begin the degassing process, and from there to the appropriate reaction chamber 16, 26 where conditions are created for it to be completely degassed and gasified in a low-oxygen atmosphere. During the desiccation, degassing and gasifying the gasses produced are carried away, mixed with air and oxidised in the catalytic reactor 38. The catalytic reactor 38 is a basic module of a system for treatment of organic material to reduce it to inorganic compounds and release organic energy contained in it. The thermal energy released by exothermic oxidation reaction is used to create proper conditions for desiccation, degassing and gasification of the organic material. The degassing and gasification temperature is kept below the temperature above which molecules of nitrogen, present in the air, would react with oxygen to form nitrogen oxides. The regulation of the temperature is achieved by controlling the inlet rate of organic material, by the introduction of non-reactive gas 17, 27 at a suitably low temperature to the reaction chamber 16, 26 or by spraying controlled amounts of water into the ante-chamber 14, 24. It is also necessary to regulate the temperature in the catalytic reactor 38, which should also be held below the temperature above which molecular nitrogen present in the atmosphere would react with oxygen to produce nitrogen oxides. The control of the temperature in the catalytic reactor 38 is achieved by regulating valves 51, 52 which vary the rate of introduction of inflammable substances to the catalytic reactor and by the introduction of non-reactive gas at a suitably low temperature.

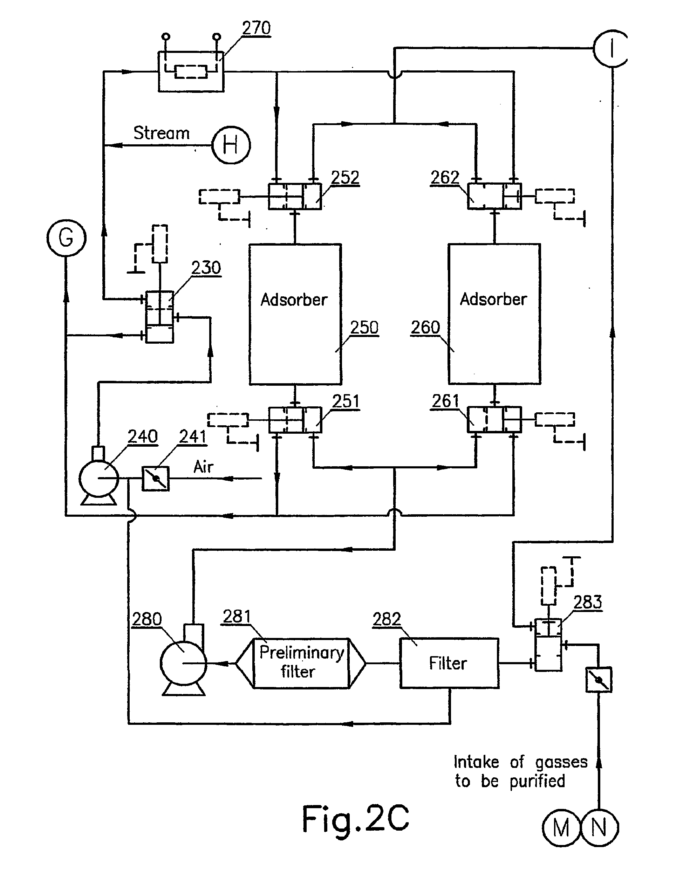

Fig. 2C presents an extended system of purifying outlet gasses with a system of adsorbers which does not form part of the invention but represent background art that is useful for understanding the invention. It can function as a system for release of the thermal energy shown in fig. 1B. Alternatively, it can operate as a stand-alone system for purifying gasses, for example gasses released in printing houses, paint shops, powder coating lines and similar industrial enterprises.

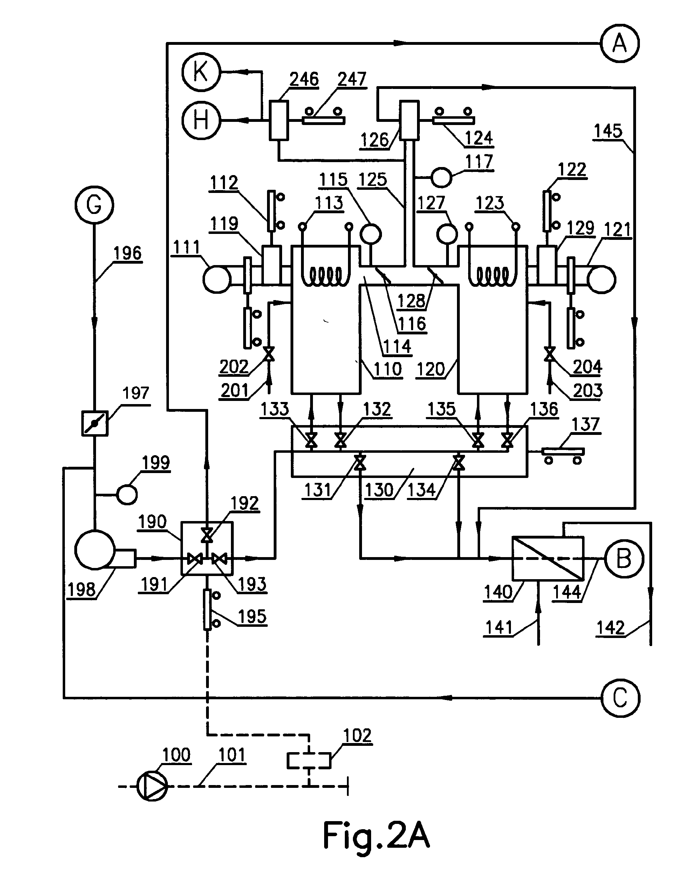

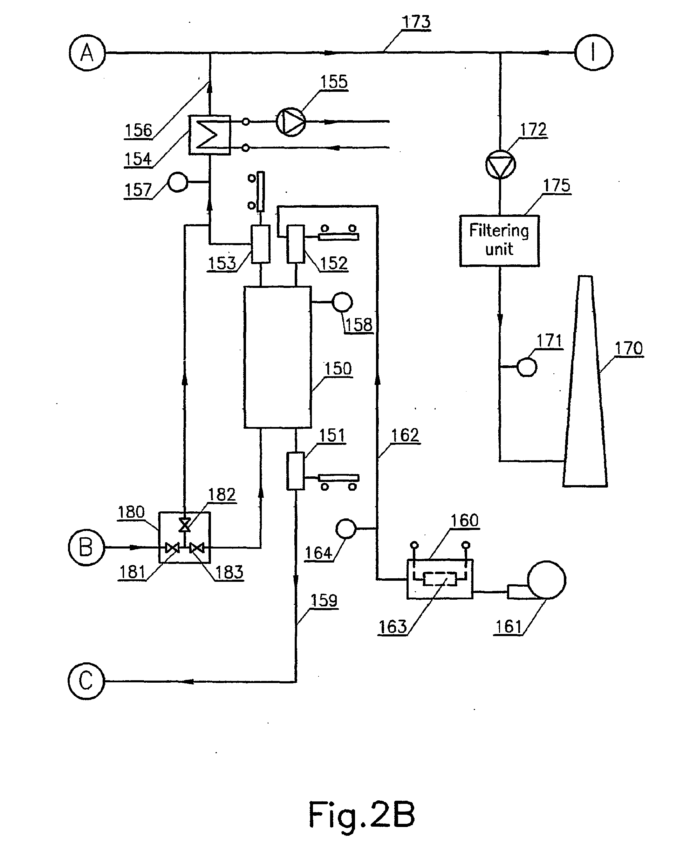

In the embodiment shown in Figs. 2A, 2B and 2C, the gasses to be purified are delivered through an arrangement of valves 283, a filter 282, e.g. a ceramic filter, a preliminary filter 281, a pump or fan 280, to the arrangement of adsorbers 250, 260 which can be carbon adsorbers with isosorbide dinitrate, with zeolite inserts, with kieselguhr inserts or other adsorbers with similar properties and parameters. The type and size of adsorbers are selected according to the composition of the gas to be purified as well as the working time of the system. The inlet and outlet of gasses to the adsorbers 250, 260 is controlled by the arrangements of valves 251 and 252, 261 and 262 which can be controlled by power, electric, mechanical or pneumatic drive. The valves 261, 262 in the position shown in Fig. 2C allow the flow of the gasses to be purified through the right/first adsorber 260 in which organic compounds are adsorbed and the purified gas is directed to the atmosphere through the pump 172, the arrangement of filters 175 and the stack 170. The purification degree and composition of the gasses directed to the stack are controlled by an arrangement of sensors 171. At the same time, through the left/second adsorber 250, a flow of desorbing gas is forced by the pump or fan 240 being part of the desorption system. The desorbing gas, together with air, whose flow is controlled by the means of the valve 241, flows also through the arrangement of valves 230 and the heater 270 being part of the desorption system and the arrangement of valves 251, 252. The desorbing gas which flows through the adsorber 250 removes impurities from it. The produced mixture, having high concentration of organic compounds is directed through the transmission line 196, shown in Fig. 2A, the valve 197, the pump or fan 198 to the reverse-flow reactor 110, 120. The volume of desorbing gas and other gasses delivered to the reverse-flow reactor 110, 120 is controlled by means of the valve or throttle 197. Information about the composition, temperature and subatmospheric pressure at which the mixture is sucked in, are transmitted by the arrangement of sensors 115, 127, 199. The three-way valve 190 - consisting of the valves 191, 192, 193 and controlled pneumatically or electrically by the control unit 195 - directs the mixture of gasses to the reverse-flow reactor through the reverse valve 130 consisting of the valves 131, 132, 133, 134, 135 and 136 and controlled through the control unit 137. The appropriate pressure or subatmospheric pressure needed for pneumatic control of devices is generated by an arrangement consisting of the pump 100, the transmission lines 101 and valves 102. The mixture of gasses can also be released directly to the atmosphere through the valve 192 being part of the three-way valve 190, the filter unit 175 and the stack 170, provided that it does not contain environmentally-harmful substances. The reverse-flow reactor usually comprises at least two catalytic modules, which in the presented embodiment are the catalytic reactors 110, 120 connected with each other by a collector 114 with throttles 116, 128. The reverse-flow reactor may also have a structure of catalytic units placed in one another or units divided by a fire-resistant barrier. In the catalytic reactors 110, 120 the CₓH_{y}, CO, water and other inflammable gasses are mixed with air delivered through supply lines 201, 203 respectively, and the air quantity is controlled by aeration valves 202, 204 respectively. The parameters necessary for the process of flameless oxidation in catalytic reactors 110, 120 are maintained by electrical heaters 113, 123 or burners 111, 121, their throughput being controlled by respective valves or throttles 119, 129 and control systems 112, 122. In the catalytic reactors, flameless oxidation of the compound mixture takes place in temperatures within the range of 100°C to 700°C, preferably between 250°C and 500°C. The temperature of flameless oxidation is controlled by the quantity of inflammable gasses or neutral gasses, such as carbon dioxide in the sufficiently low temperature. A connector pipe 125 is connected to the collector 114 linking the catalytic reactors 110, 120 together, and the temperature, pressure and composition of the gas mixture is adjusted by the control system 117. The connector pipe 125 has a system of valves 126, 246 at its end. The valves are adjusted by the control systems 124, 247 respectively. From the connector pipe 125, the mixture of gasses - being a stream of hot gasses - is directed to point K through the transmission line 34 shown in Figs. 1A and 1B to the system of gasifying organic material to obtain thermal energy. The mixture of gases can be also directed through the valve 126 controlled by a switch 124 through the transmission line 145, directly or through the heat exchanger 140, the transmission line 144 and the three-way valve 180 with valves 181, 182, 183, to the secondary catalytic reactor 150 which has a filter unit at its outlet. Alternatively, the secondary catalytic reactor 150 can be replaced by an active filter with activated carbon, an adsorber or a catalytic after-burner of a different kind. The heat exchange medium is delivered to the heat exchanger 140 through the transmission line 141 and carried off through the transmission line 142.

The suction and force pump 172, the filter unit 175 and the stack 170 carry off the mixture of gasses by the transmission lines 156, 173 from the secondary catalytic reactor 150 to the atmosphere, where the mixture of gasses is a stream of gasses cooled in the heat exchanger 154 in which the coolant circuit is forced by an air or water pump 155. If the mixture of gasses escaping from the reverse-flow reactor does not contain hazardous gasses or substances over admissible levels, it is directed through the valve 182, the heat exchanger, through the transmission line 173 to the stack 170. A prolonged flow of polluted gasses through the secondary catalytic reactor, the active filter with activated carbon, the adsorber or any other catalytic after-burner in one direction only would decrease the throughput or the purifying efficiency of the secondary catalytic reactor 150 or the active filter. In order to prevent it, once in given period of time and depending on the pollution grade of the gasses, heated air should be transmitted through the secondary catalytic reactor 150 or active filter in the opposite direction, i.e. from the outlet of the secondary catalytic reactor or filter to the inlet of the secondary catalytic reactor or filter to force the counter flow of air. The counter flow of air should be forced if the gasses escaping the reverse-flow reactor contain impurities in amounts below the admissible levels. Then, the gasses are directed through the by-pass flow line from the valve 182 to a place behind the valve 153. The counter flow of air is forced by a blower 161. Upon leaving the blower or the air pump 161, the air is heated in the heater 160 fitted with a radiator 163 to a temperature over 100°C and transmitted through the transmission line 162 with a sensor 164 and the valve 152 to the secondary catalytic reactor 150. Then it is directed to the inlet of the suction and force pump 198 through the valve 151 and the transmission line 159. Switching from adsorption to desorption cycle and back is achieved through a change of direction in the flow of gasses and air in the secondary catalytic reactor, when necessary for the catalytic process which is adjusted by the control system 158. The operation of the heat exchanger is adjusted depending on the indication of the control system 157 and the parameters and composition of the gasses released to the atmosphere are controlled by the system of sensors 171.

After the bed of the right/first adsorber 260 is saturated, and after the valves 251, 252, 261 and 262 are reset, the gasses to be purified are directed to the adsorber 250 and the flow of desorbing gas is forced through the adsorber 260 by the pump or fan 240. The desorbing gas is directed through the arrangement of valves 230, the heater 270 and the arrangement of valves 261 and 262. Flowing through the adsorber 260, the desorbing gas removes impurities from it and the mixture derived from it, featuring high concentration of the organic compounds, is directed through the transmission line 196, valve 197, the pump or fan 198 to the reverse-flow reactor 110, 120. After the adsorber 250 bed is saturated, the adsorption-desorption cycle on the adsorbers 250, 260 is usually repeated in such a way that when the process of adsorption is taking place in one of the adsorbers 250, 260, the process desorption is taking place in the other adsorber 260, 250, respectively. The process of gas purification run in the adsorption-desorption cycles in the adsorbers 250, 260 provides for purification of a stream of gasses of high flow capacity, in the order of 100 000 m³/h and of low concentration of organic compounds. The purification of the adsorbers 250, 260 can be carried out at low flow rates of desorbing gas. As a result, the mixture of gasses which are a product of the desorption process will have high concentration of organic compounds, suitable for catalytic purification of gasses in the catalytic reactor in an endothermic process i.e. where the process of oxidation is maintained through a sufficient amount of organic compounds in the mixture of gasses. Thus, the arrangement of adsorbers 250, 260 provides for economical purification in the catalytic reactor of a stream of gasses having high flow rates and low concentration of organic compounds.

The stream of gasses having high flow rates and low concentration of organic compounds is purified by means of a carbon adsorber or another kind of adsorber with similar properties and parameters. During purification of the bed saturated with organic compounds, a stream of gasses with low flow rate and high concentration is produced. Its purification is possible by means of a catalytic reactor of low efficiency or by means of a thermal reactor in which organic material is incinerated in the flame of burning natural gas or coke-oven or oil. In the most efficient solution, the ratio of adsorber flow capacity to the after-burner flow capacity should be approximately equal to the inverse of the concentration of the compounds in the stream of gasses during desorption, which means that the proportion of the flow rate of the stream of gasses to be purified to the flow rate of desorbing gas is approximately equal to the inverse of the concentration of compounds in the stream of gasses being purified to the concentration of compounds in the stream of desorbing gas during desorption.

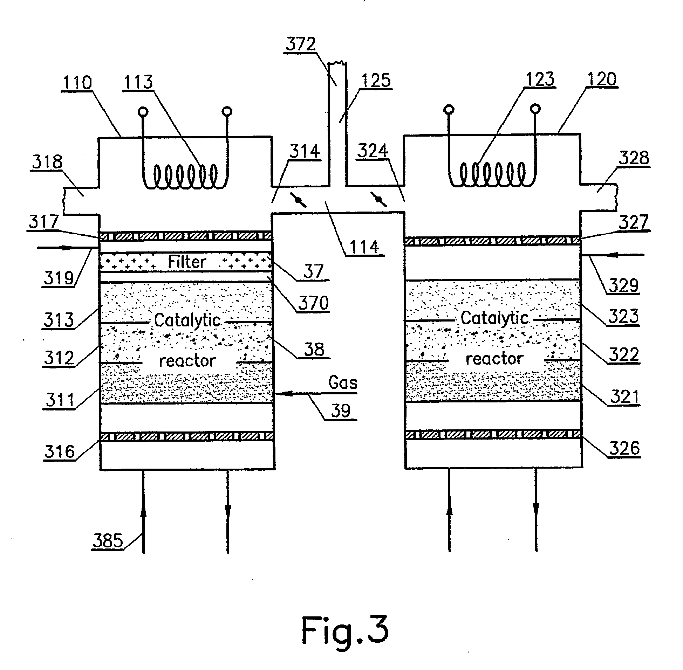

Fig. 3 presents detailed embodiment of a reverse-flow reactor, which is formed of two catalytic reactors. Additionally, in Fig. 3 is shown the catalytic reactor 38 shown in Fig. 1B. This catalytic reactor 38 has an additional gas inlet 39 and a filter arrangement 37 in several layers. The reactor has an inlet 385, an oxidising platinum (Pt) catalyst 311 with admixtures, a palladium (Pd) catalyst 312 with admixtures and an oxide-reducing catalyst 313 with admixtures. The catalysts are arranged in layers spread across the whole interior section of the catalytic reactor. Adjacent to the inlet 385 and the outlet 372 of the catalytic reactor 38 are shutters 316, 317 with apertures respectively, which allow an even flow of oxidation products within the space of the catalytic reactor. Furthermore, to improve the even flow of oxidation products within the space of the catalytic reactor, a space 370 is left between the catalytic reactor 38, the filter 37 and the shutter 317.

In turn, the reverse-flow reactor consists of two catalytic reactors 110, 120 as shown in Fig. 3, but without the filter 37 of the left reactor (which is shown for the purpose of presenting a structure of a single catalytic reactor shown in Fig. 1 B). Each of the catalytic reactors 110, 120 which are part of the reverse-flow reactor, comprises an oxidizing platinum (Pt) catalyst 311, 321 with admixtures, a palladium (Pd) catalyst 312, 322 with admixtures and an oxide-reducing catalyst 313, 323 with admixtures. The catalysts constitute subsequent layers covering the entire profile of the catalytic reactor. The reverse-flow reactor additionally has gas inlets 319, 329 and additional inlets 318, 328. The inlet and outlet 314, 324 forming an outlet 125 of the catalytic reactors 110, 120 are equipped with shutters 316, 326 and 317, 327 respectively with openings for equal distribution of the oxidation products in the entire space of each catalytic reactor.

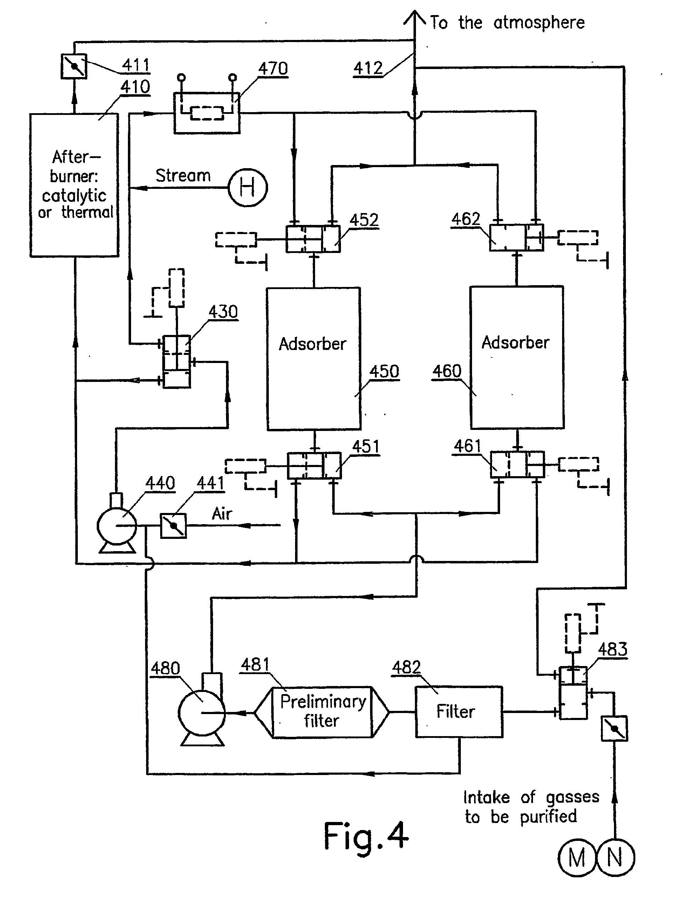

Fig. 4 shows a system for purifying gasses which does not form part of the invention but represent background art that is useful for understanding the invention and is designed mainly for small plants or systems for treating energy-containing organic materials shown in Fig. 1A. The produced gasses are delivered to the system through an arrangement of valves 483, a ceramic filter 482, a preliminary filter 481 and a pump 480 to an arrangement of adsorbers 450, 460, e.g. carbon adsorbers. The suction and offtake of gasses to adsorbers is controlled by the arrangements of valves 451, 452 and 461, 462. The valves 461 and 462, in position as shown in Fig. 4, provide for the flow of gasses to be purified through the adsorber 460 where the organic compounds are adsorbed and the purified gas is directed to the atmosphere through the flow line 412. At the same time, through the adsorber 450, a flow of desorbing gas is forced by the pump or fan 440 to be then controlled by the arrangement of valves 430, the heater 470 and the arrangement of valves 451 and 452. The desorbing gas flows through the adsorber 450 and removes impurities from it. A mixture derived from it, having high concentration of organic compounds, is driven to the catalytic or thermal after-burner 410 and then directed through the control valve 411 to the atmosphere, provided that the content of the compounds harmful to the natural environment does not exceed permissible values. If the process of purifying gasses requires it, the mixture of gasses derived from the catalytic after-burner can be transferred to the inlet of one of the adsorbers 450, 460 operating in the state of adsorption, through an appropriate flow line.

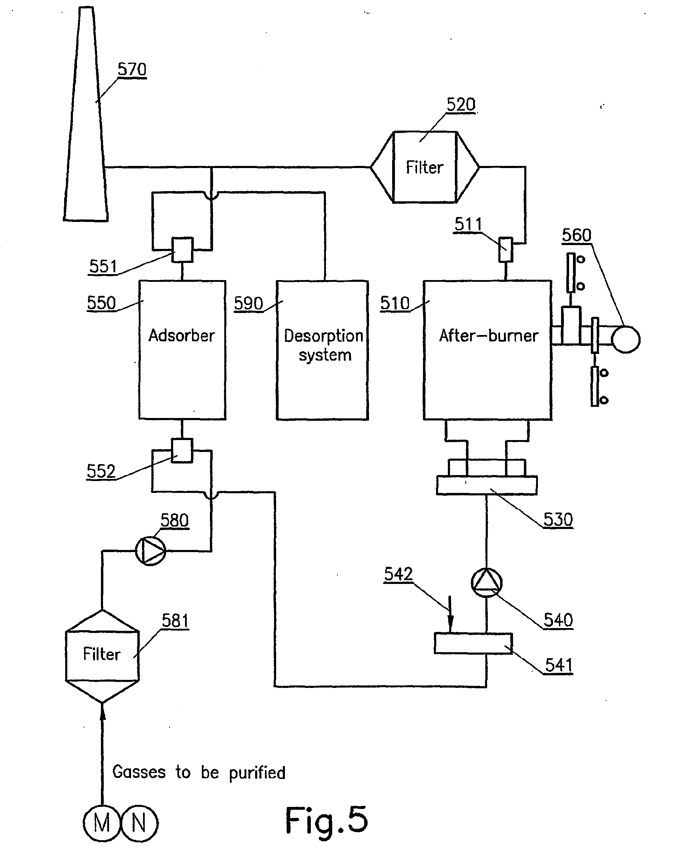

Fig. 5 shows a system of purifying outlet gasses with a low concentration of organic compounds which does not form part of the invention but represent background art that is useful for understanding the invention. The system is designed for plants with a discontinuous work cycle, and its structure is relatively simple. It consists of the filter 581 through which the gasses to be purified are transmitted. Their flow is forced by the pump or fan 580. The outlet of the pump is connected with the valve 552 which directs the gasses to the adsorber 550. After purification, the gasses are directed to the stack 570 through the valve 551. After the bed of adsorber 550 is saturated with organic compounds, the adsorber undergoes desorption by the means desorbing gas produced in the desorption system 590 and driven through the arrangement of valves 551. The desorbing gas containing organic compounds is then directed through the valve 552 and 541, the pump or fan 540 and the arrangement of valves 530 to the catalytic after burner 510 of a reverse, flow, reverse flow or thermal type, which is then equipped with a burner whose throughput is controlled by appropriate valves or throttles and control units. The gas, being purified of organic compounds, is then directed to the stack 570 through the arrangement of valves 511 and the filter 520. The air necessary for flameless oxidation of gasses containing organic compounds is delivered through the air inlet 542.

## Claims

1. A system for treating organic material to reduce it to inorganic compounds and to deliver thermal energy emitted during reducing the organic material to heating units, **characterised in that** the system is fitted with mechanical means to separate water from the organic material and a reverse-flow reactor with a first reactor (110) and a second reactor (120) connected by a collector (114) on a catalytic after-burning end and on a suction-offtake end through a reverse valve (130), which in one position delivers the gasses to be purified to an inlet of the first reactor (110) and, at the same time, carries off purified gasses from an inlet of the second reactor (120) to an outlet flow line (145), and in another position, delivers the gasses to be purified to the inlet of the second reactor (120) and, at the same time, carries off the purified gasses from the inlet of the first reactor (110) to the outlet flow line (145), the first reactor (110) and the second reactor (120) having a multilayered structure comprising an oxidizing platinum catalyst (311) with admixtures, a palladium catalyst (312) with admixtures and an oxide-reducing catalyst (313) with admixtures, wherein the outlet flow line (145) is connected through a connector pipe (125) to the collector (114) with throttles (116, 128) and to the catalytic after-burning end of the first and second catalytic reactors (110, 120) and that the connector pipe (125) is connected with a three-way valve (180), which in one position connects the outlet flow line (145) to an inlet of one chosen from an active filter with activated carbon, an adsorber, a catalytic after-burner and a secondary catalytic reactor (150) with an outlet connected to the atmosphere, and in another position, connects the outlet flow line (145) to the atmosphere.

2. The system for treating organic material according to claim 1 **characterised in that** at an inlet (385) and an outlet (372) of the first and second catalytic reactors (110, 120) are situated shutters (316, 317, respectively) having apertures assuring an even flow of oxidation products within the entire space of the first and second catalytic reactors (110, 120).

3. The system for treating organic material according to claim 1 **characterised in that** the organic material are waste/sludge and/or willow chippings and/or gasses containing organic compounds and/or organic material derived from domestic and industrial sewage in the form of sludge.

4. The system for treating organic material according to claim 1 **characterised in that** a by-pass flow line designed to carry off the purified gasses from the first and second catalytic reactors is connected to the atmosphere.

5. The system for treating organic material according to claim 1 wherein to one chosen from the active filter with activated carbon, the adsorber, the catalytic after-burner and the secondary catalytic reactor (150) is connected a counter flow system (161) forcing a counter flow of air in one chosen from the active filter with activated carbon, the adsorber, the catalytic after-burner and the secondary catalytic reactor (150), from an outlet of one chosen from the active filter with activated carbon, the adsorber, the catalytic after-burner and the secondary catalytic reactor (150) toward its inlet.

6. A method for treating organic material to reduce them to inorganic compounds wherein, if necessary, water is separated from the organic material by mechanical means and the water-content in the organic material is reduced to ca. 80% and then the organic material are delivered to at least one unit designed to degas and gasify the organic material in which necessary conditions are assured to completely degas and gasify the organic material at reduced oxygen levels, and during the process of degassing/gasification of the organic material gasses thus produced are driven off, mixed with air and their flameless oxidation takes place in a reactor and thermal energy derived from the flameless oxidation is utilised, and **characterised in that** the unit designed to the flameless oxidation is provided with a reverse-flow reactor with a first reactor and a second reactor connected by a collector on a catalytic after-burning end and on a suction-offtake end through a reverse valve, which in one position delivers the gasses to be purified to an inlet of the first reactor and, at the same time, carries off purified gasses from an inlet of the second reactor to an outlet flow line, and in another position, delivers the gasses to be purified to the inlet of the second reactor and, at the same time, carries off the purified gasses from the inlet of the first reactor to the outlet flow line, the first reactor and the second reactor having a multilayered structure comprising an oxidizing platinum catalyst with admixtures, a palladium catalyst with admixtures and an oxide-reducing catalyst with admixtures, wherein hot gasses are carried out through a connector pipe from collector with throttles connecting the catalytic reactors on the catalytic after-burning end and are mixed with the purified gasses derived from the outlet flow line, and mixture of the hot gasses is delivered to an inlet of one chosen from an active filter with activated carbon, an adsorber, a catalytic after-burner and a secondary catalytic reactor in which the mixture of the purified gasses and the hot gasses is subjected to flameless oxidation and then released to the atmosphere.

7. The method for treating organic material according to claim 6 **characterised in that** the organic material are waste/sludge and/or willow chippings and/or gasses containing organic compounds and/or organic material derived from domestic and industrial sewage in the form of sludge or their mixture.

8. The method for treating organic material according to claim 6 **characterised in that** the thermal energy derived from the flameless oxidation is utilised to create the conditions necessary to degas and gasify the waste/sludge and/or willow chippings and/or organic material derived from domestic and industrial sewage in the form of sludge.

9. The method for treating organic material according to claim 6 **characterised in that** to one chosen from the active filter with activated carbon, the adsorber, the catalytic after-burner and the secondary catalytic reactor is connected a system forcing the counter flow of air in one chosen from the active filter with activated carbon, the adsorber, the catalytic after-burner and the secondary catalytic reactor, from the outlet of one chosen from the active filter with activated carbon, the adsorber, the catalytic after-burner and the secondary catalytic reactor toward its inlet.

10. The method for treating organic material according to claim 6 **characterised in that** in order to prevent the decrease of the purifying efficiency of one chosen from the active filter with activated carbon, the adsorber, the catalytic after-burner and the secondary catalytic reactor, hot air is delivered to the outlet of one chosen from the active filter with activated carbon, the adsorber, the catalytic after-burner and the secondary catalytic reactor and then transmitted through one chosen from the active filter with activated carbon, the adsorber, the catalytic after-burner and the secondary catalytic reactor on the direction opposite to the flow of the mixture of purified gasses and hot gasses which are then delivered to the inlet of one of the first reactor and the second reactor to which the gasses derived from gasification are delivered.

## Patentansprüche

1. Ein System zur Behandlung von organischem Material und diese auf anorganische Komponenten zu reduzieren und emittierte während einer Reduzierung des organischen Material Wärmeenergie an Heizeinheiten zu liefern, **dadurch gekennzeichnet, dass** es zum Trennen des Wassers vom organischen Material mit mechanischen Mitteln ausgerüstet ist und einer Rückstrom-Reaktor mit dem ersten Reaktor (110) und einem zweiten Reaktor (120) durch einen Kollektor (114) auf einer Katalyt-Nachbrenner- Endung und einem Saugabzugsende mittels eines Rückschlagventils (130) verbunden ist, welches in einer Position das Gas zum Reinigen an den Einlass des ersten Reaktors (110) weiterleitet und, zur gleichen Zeit, bereits gereinigtes Gas vom Einlass des zweiten Reaktors (120) zu einer Ausflussstromlinie (145) weitertransportiert und in einer anderen Position das zu reinigende Gas des zweiten Reaktors (120) weitertransportiert/leitet und, zur gleichen Zeit, das bereits gereinigte Gas vom Einlass des ersten Reaktors (110) zu der Ausflussstromlinie (145) weitertransportiert, wobei der erste Reaktor (110) und der zweite Reaktor (120) haben eine mehrschichtige Struktur, welche einen Oxidations-Platin-Katalysator (311) mit Beimischungen, einen Palladium-Katalysator (312) mit Beimischungen und einen Oxidations-Reduzier-Katalysator mit Beimischungen enthält, worin die Ausflussstromlinie (145) mit einem Verbindungsrohr (125) zum Sammler (114) mittels Drosseln (116, 128) und der Katalyt-Nachbrenner-Endung des ersten und des zweiten Katalyt-Reaktors (110, 120) verbunden ist, und dass das Verbindungsrohr (125) mit einem Dreiwegeventil (180) verbunden ist, welches, in einer Position, die Ausflussstromlinie (145) mit einem Einlass von einem gewählten aus einem Aktivfilter mit Aktivkohle, einem Adsorber, einem Katalyt-Nachbrenner und einem nachgeordneten Katalyt-Reaktor (150) verbindet, und welches, in einer anderen Position, die Ausflussstromlinie (145) mit der Atmosphäre verbindet.

2. Das System zum Behandeln von organischem Material nach Anspruch 1, **dadurch gekennzeichnet, dass** an einem Einlass (385) und einem Auslass (372) des ersten und zweiten katalytischen Reaktors (110, 120, entsprechend) Blendenklappen mit Blendenöffnungen angeordnet sind, um einen gleichmäßigen Fluss der Oxidationsprodukte innerhalb des gesamten Raumes des ersten und zweiten katalytischen Reaktors (110, 120) zu sichern.

3. Das System zum Behandeln von organischem Material nach Anspruch 1, **dadurch gekennzeichnet, dass** das organische Material Abfälle/Schlamm und/oder Reisswolfteile und/oder die organische Komponente haltige Gase, und/oder organisches Material von haushalts- und industriellen Abwässern in der Form von Schlamm ist.

4. Das System zum Behandeln von organischem Material nach Anspruch 1, **dadurch gekennzeichnet, dass** eine Überbrückungsstromlinie für die gereinigten Gase von dem ersten und zweiten katalytischen Reaktor mit der Atmosphäre zu verbinden, vorgesehen ist.

5. Das System zum Behandeln von organischem Material nach Anspruch 1, **dadurch gekennzeichnet, dass** mit einem gewählten aus einem Aktivfilter mit Aktivkohle, einem Adsorber, einem Katalyt-Nachbrenner und einem nachgeordneten Katalyt-Reaktor (150) ein Gegenstromsystem (161) verbunden ist, welches einen Luftgegenstrom in einem gewählten aus einem Aktivfilter mit Aktivkohle, einem Adsorber, einem Katalyt-Nachbrenner und einem nachgeordneten Katalyt-Reaktor (150) von einem Auslass des gewählten aus einem Aktivfilter mit Aktivkohle, einem Adsorber, einem Katalyt-Nachbrenner und einem nachgeordneten Katalyt-Reaktor (150) zu seinem Einlass antreibt.

6. Verfahren zum Behandeln von organischen Materialien und diese auf anorganische Komponenten zu reduzieren, und wenn erforderlich das Wasser von dem organischem Material durch mechanische Mittel getrennt wird und dabei der Wasserinhalt des organischen Materials um ca. 80 % reduziert wird, und dann das organische Material zu einer Entgasungseinheit geliefert und das organische Material in Gas umgewandelt wird, wobei die erforderlichen Bedingungen gesichert sind, das organische Material bei reduziertem Sauerstoffniveu vollständig zu entgasen und in Gas umzuwandeln und die während des Prozesses der Entgasung/Gasumwandlung des organischen Materials so produzierten Gase abgeleitet werden, wobei dieses Luftgemisch und ihre flammenlose Oxidation in einem Reaktor stattfinden und die Wärmeenergie, hergeleitet aus der flammenlosen Oxidation wird verwendet, **dadurch gekennzeichnet, dass** die für die flammenlose Oxidation bestimmte Einheit mit einem Rückstrom-Reaktor ausgerüstet ist, wobei dieser einen ersten Reaktor und einen zweiten Reaktor hat, und durch einen Sammler mit einem Katalyt-Nachbrennerende verbunden ist und auf einem Saugabzugsende angeordnet und durch ein Rückschlagventil verbunden ist, welches in einer Position die zu reinigenden Gase zu einem Einlass des ersten Reaktors liefert und zur gleichen Zeit gereinigte Gase von einem Einlass des zweiten Reaktor zu einem Ausgangs-Anschlusslinie wegtransportiert, und in einer anderen Position die zu reinigenden Gase zum Einlass des zweiten Reaktors liefert und zur gleichen Zeit die gereinigten Gase vom Einlass des ersten Reaktors zu dem Ausgangsanschlussrohr wegtransportiert, worin der erste und der zweite Reaktor haben eine mehrschichtige Struktur mit einem Oxidierungs-Platin-Katalysator mit Beimischungen, einem Palladium-Katalysator mit Beimischungen und einem Oxid-Reduzierungskatalysator mit Beimischungen, worin heiße Gase durch ein Verbindungsrohr vom Sammler mit Drosseln hindurchgeführt werden, welche die Katalyt-Reaktoren auf dem Katalyt-Nachbrenner verbinden und die mit den von gereinigten Gasen des Ausflusslinie hergeleitetet worden sind, gemischt werden und einem Gemisch der heißen Gase, welches zu einem Einlass von einem von einem gewählten aus einem Aktivfilter mit Aktivkohle, einem Adsorber, einem Katalyt-Nachbrenner und einem nachgeordneten Katalyt-Reaktor (150), in welchem die Mischung der gereinigten Gase und der heißen Gase der flammenlosen Oxidation unterworfen sind, geliefert werden und dann in die Atmosphäre freigegeben werden.

7. Das Verfahren zum Behandeln von organischem Material nach Anspruch 6 **dadurch gekennzeichnet, dass** das organische Material Abfälle/Schlamm und/oder Reisswolfteile und/oder die organische Komponente haltige Gase, und/oder organisches Material von haushalts- und industriellen Abwässern in der Form von Schlamm ist.

8. Das Verfahren zum Behandeln von organischem Material nach Anspruch 6 **dadurch gekennzeichnet**, das die von der flammenlosen Oxidation hergeleitete Wärmeenergie verwendet wird, um die Bedingungen, die für das Entgasen und Vergasen mit Gas flammenlos verbrennen des Abfalles/Schlammes und/oder der Reisswolfteile und/oder organisches Material von haushalts- und industriellen Abwässern in der Form von Schlamm erforderlich sind, zu erschaffen.

9. Das Verfahren zum Behandeln von organischem Material nach Anspruch 6 **dadurch gekennzeichnet, dass** mit einem gewählten aus einem Aktivfilter mit Aktivkohle, einem Adsorber, einem Katalyt-Nachbrenner und einem nachgeordneten Katalyt-Reaktor ein Gegenstromsystem verbunden ist, welches einen Luftgegenstrom in einem gewählten aus einem Aktivfilter mit Aktivkohle, einem Adsorber, einem Katalyt-Nachbrenner und einem nachgeordneten Katalyt-Reaktor von einem Auslass des gewählten aus einem Aktivfilter mit Aktivkohle, einem Adsorber, einem Katalyt-Nachbrenner und einem nachgeordneten Katalyt-Reaktor zu seinem Einlass antreibt.

10. Das Verfahren zum Behandeln von organischem Material nach Anspruch 6 **dadurch gekennzeichnet, dass** zwecks einer Verhinderung der Reinigungseffizienz von einem gewählten aus einem Aktivfilter mit Aktivkohle, einem Adsorber, einem Katalyt-Nachbrenner und einem nachgeordneten Katalyt-Reaktor heiße Luft zu dem Auslass des gewählten aus einem Aktivfilter mit Aktivkohle, einem Adsorber, einem Katalyt-Nachbrenner und einem nachgeordneten Katalyt-Reaktor zu dem Auslass des einem gewählten aus einem Aktivfilter mit Aktivkohle, einem Adsorber, einem Katalyt-Nachbrenner und einem nachgeordneten Katalyt-Reaktor in Richtung gegenüber des Flusses der Mischung der gereinigten Gase und der heißen Gase, welche dann zum Einlass des ersten Reaktors und des zweiten Reaktors geliefert werden zu welchem die Gase aus der Vergasung, geliefert werden.

## Revendications

1. Un système de traitement des matières organiques pour les réduire à des composés inorganiques et de fournir l'énergie thermique émise lors de la réduction de la matière organique pour les appareils de chauffage, **caractérisé en ce que** le système est équipé des moyens mécaniques pour séparer l'eau de la matière organique et un réacteur à écoulement inversé avec un premier réacteur (110) et un deuxième réacteur (120) reliés par un collecteur (114) sur une sortie de post-combustion catalytique et sur une sortie d'aspiration prélèvements par une vanne à renversement (130), laquelle dans une position délivre les gaz à purifier à une entrée du premier réacteur (110) et, en même temps, exerce hors les gaz purifiés d'une entrée du deuxième réacteur (120) à une ligne de flux de sortie (145), et dans une autre position, délivre les gaz à purifier à l'entrée du deuxième réacteur (120) et, en même temps, exerce hors les gaz purifiés de l'entrée du premier réacteur (110) à la ligne de flux de sortie (145), le premier réacteur (110) et le deuxième réacteur (120) présentant une structure multicouche comprenant un catalyseur oxydant au platine (311) avec des adjuvants, un catalyseur au palladium (312) avec des adjuvants et un catalyseur de réduction d'oxyde (313) avec des adjuvants, où la ligne de flux de sortie (145) est reliée par un tuyau de raccordement (125) au collecteur (114) avec des vannes d'étranglement (116, 128) et à la sortie de catalyseur de postcombustion des premier et deuxième réacteurs catalytiques (110, 120), et que le tuyau de raccordement (125) est relié à une soupape à trois voies (180), laquelle dans une position relie la ligne de flux de sortie (145) à l'entrée d'un choisi parmi un filtre actif avec du charbon activé, un adsorbeur, un catalyseur de post-combustion et un réacteur catalytique secondaire (150) avec une sortie reliée à l'atmosphère, et dans une autre position, relie la ligne de flux de sortie (145) dans l'atmosphère.

2. Le système de traitement des matières organiques selon la revendication 1, **caractérisé en ce que** lors d'une entrée (385) et d'une sortie (372) du premier et deuxième réacteurs catalytiques (110, 120) sont situés des volets (316, 317, respectivement) ayant des ouvertures assurant un écoulement régulier des produits d'oxydation dans l'espace entier du premier et deuxième réacteurs catalytiques (110, 120).

3. Le système de traitement des matières organiques selon la revendication 1, **caractérisé en ce que** les matières organiques sont des déchets/boues et/ou de copeaux de saule et/ou des gaz contenant des composés organiques et/ou des matières organiques provenant des eaux usées domestiques et industrielles, sous la forme de boues.

4. Le système de traitement des matières organiques selon la revendication 1, **caractérisé en ce qu'**une tuyauterie de by-pass conçue pour transporter des gaz purifiés au dehors des premier et deuxième réacteurs catalytiques est reliée à l'atmosphère.

5. Le système de traitement des matières organiques selon la revendication 1, **caractérisé en ce que** à l'un choisi parmi le filtre actif avec du charbon activé, l'adsorbeur, le catalyseur de post-combustion et le réacteur catalytique secondaire (150) est connecté un système à contre-courant (161) lequel force un contre-écoulement d'air dans l'un choisi parmi le filtre actif de carbone activé, l'adsorbeur, le catalyseur de post-combustion et le réacteur catalytique secondaire (150), de la sortie d'un choisi parmi le filtre actif de carbone activé, l'adsorbeur, le catalyseur post-combustion et le réacteur catalytique secondaire (150) vers son entrée.

6. Un procédé pour traiter les matières organiques pour les réduire à des composés inorganiques, si nécessaire, l'eau est séparée de la matière organique par des moyens mécaniques et la teneur en eau dans la matière organique est réduite à env. 80% et ensuite les matières organiques sont livrés à au moins une unité conçue pour dégazer et gazéifier la matière organique dans laquelle les conditions nécessaires sont assurées à complètement dégazer et gazéifier la matière organique aux niveaux réduits d'oxygène, et pendant le processus de dégazage/gazéification de la matière organique des gaz ainsi produits sont chassés, mélangé à l'air et leur oxydation sans flamme se déroule dans un réacteur et l'énergie thermique provenant de l'oxydation sans flamme est utilisée, et **caractérisé en ce que** l'appareil conçu pour l'oxydation sans flamme est fourni avec un réacteur à écoulement reverse avec le premier réacteur et le deuxième réacteur relié par un collecteur sur une sortie de post-combustion catalytique et sur une sortie d'aspiration prélèvements par une vanne à renversement, qui dans l'une position délivre les gaz à purifier à une entrée du premier réacteur et, en même temps, emporte les gaz purifiés d'une entrée du deuxième réacteur à la ligne de flux de sortie, et dans l'autre position, délivre les gaz à purifier à l'entrée du deuxième réacteur et, en même temps, exerce au dehors les gaz purifiés de l'entrée du premier réacteur à la ligne de flux de sortie, le premier réacteur et le deuxième réacteur ayant une structure multicouche comprenant le catalyseur oxydant au platine avec les adjuvants, le catalyseur au palladium avec les adjuvants et le catalyseur de réduction d'oxyde avec les adjuvants, et les gaz chauds sont transportés à travers la conduite de raccordement du collecteur avec les vannes d'étranglement reliant les réacteurs catalytiques sur la sortie du catalyseur de post-combustion, et sont mélangés avec les gaz purifiés provenant de la ligne de flux de sortie, et le mélange des gaz chauds est livré à l'entrée de celui choisi parmi le filtre actif avec du charbon activé, l'adsorbeur, le catalyseur de post-combustion et le réacteur catalytique secondaire dans lequel le mélange des gaz purifiés et les gaz chauds est soumis à l'oxydation sans flamme, et puis relâché dans l'atmosphère.

7. Le procédé de traitement des matières organiques selon la revendication 6, **caractérisé en ce que** les matières organiques sont des déchets/boues et/ou de copeaux de saule et/ou des gaz contenant des composés organiques et/ou de matières organiques provenant des eaux usées domestiques et industrielles, sous la forme de boues ou de leurs mélange.

8. Le procédé de traitement des matières organiques selon la revendication 6, **caractérisé en ce que** l'énergie thermique provenant de l'oxydation sans flamme est utilisée pour créer les conditions nécessaires pour dégazer et gazéifier les déchets/boues et/ou les copeaux de saule et/ou les matières organiques provenant des eaux usées domestiques et industrielles sous la forme de boues.

9. Le procédé de traitement des matières organiques selon la revendication 6 **caractérisé en ce que** à l'un choisi parmi le filtre actif avec du charbon activé, l'adsorbeur, le catalyseur de post-combustion et le réacteur catalytique secondaire est connecté un système qui force un contre-écoulement d'air dans l'un choisi parmi le filtre actif avec du charbon activé, l'adsorbeur, le catalyseur de post-combustion et le réacteur catalytique secondaire, de la sortie de l'un choisi parmi le filtre actif avec du charbon activé, l'adsorbeur, le catalyseur de post-combustion et le réacteur catalytique secondaire vers son entrée.

10. Le procédé de traitement des matières organiques selon la revendication 6 **caractérisé en ce que** dans le but d'empêcher la diminution de l'efficacité de purification de l'un choisi parmi le filtre actif avec du charbon activé, l'adsorbeur, le catalyseur de post-combustion et le réacteur catalytique secondaire, l'air chaud est livré à la sortie de celui choisi parmi le filtre actif avec du charbon activé, l'adsorbeur, le catalyseur de post-combustion et le réacteur catalytique secondaire, puis transmise par l'un choisi parmi le filtre actif avec du charbon activé, l'adsorbeur, le catalyseur de post-combustion et le réacteur catalytique secondaire sur la direction opposée à l'écoulement du mélange des gaz purifiés et des gaz chauds qui sont ensuite remis à l'entrée de l'un des premier et deuxième réacteurs à lequel les gaz provenant de la gazéification sont livrés.
